(19)

Europäisches
Patentamt
European
Patent Office
Office européen
des brevets

(11) **EP 2 570 805 A1**

(12) **EUROPEAN PATENT APPLICATION**
published in accordance with Art. 153(4) EPC

(43) Date of publication:
**20.03.2013 Bulletin 2013/12**

(21) Application number: **11780132.4**

(22) Date of filing: **27.04.2011**

(51) Int Cl.:
*G01N 29/06* (2006.01)          *G01N 29/34* (2006.01)
*G01N 29/44* (2006.01)

(86) International application number:
**PCT/CN2011/073349**

(87) International publication number:
**WO 2011/140911 (17.11.2011 Gazette 2011/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.05.2010 CN 201010178619**

(71) Applicant: **Xi'an Jinbo Testing Instruments Co.,
Ltd
Xi'an, Shaanxi 710089 (CN)**

(72) Inventors:
• **LIU, Xiaojun
Xi'an
Shaanxi 710048 (CN)**
• **WANG, Bo
Xi'an
Shaanxi 710048 (CN)**

(74) Representative: **Coquel, Jean-Marc
Schmit-Chretien-Schihin SNC
111, cours de Médoc
CS 40009
F-33070 Bordeaux Cedex (FR)**

(54) **CRACK DETECTION SYSTEM AND METHOD**

(57)     A crack detection system and method thereof are disclosed. Wherein, the crack detection system comprises: a laser (10) for producing a pulse laser; an optical path adjusting device (20) for adjusting the optical path of the pulse laser produced by the laser (10) and then projecting the laser on a crack detection surface of a workpiece to scan the crack detection surface with the laser; a signal receiving device (30) for capturing thermal excitation ultrasonic wave signal generated by the crack detection workpiece scanned by the laser; an imaging device (40) for generating a dynamic waveform image based on the thermal excitation ultrasonic wave signal received by the signal receiving device (30).

Dynamic waveform image

Laser device ⟶ 10

Pulse laser

Optical path adjusting device ⟶ 20

Projecting the pulse laser on a workpiece's surface to be detected

Imaging device ⟶ 40

thermal excitation ultrasonic wave signal

Signal receiving device ⟶ 30

thermal excitation ultrasonic wave signal

**FIG. 1**

EP 2 570 805 A1

**Description**

CROSS REFERENCE TO RELATED APPLICATIONS

The present application claims priority to Chinese Patent Application No. 201010178619.3, filed on May 14, 2010, and entitled "Defect Detecting System and Method", the entire disclosure of which is incorporated herein by reference.

TECHNICAL FIELD

The present disclosure generally relates to nondestructive testing field, and more particularly, to a defect detecting system and method using the ultrasonic wave technology.

BACKGROUND

Recently, nondestructive testing to detect internal defects of a workpiece has become very popular in industrial production and application. Among them, ultrasonic wave defect detection technologies are widely applied.
In conventional ultrasonic wave defect detection technologies, defects in a workpiece are detected by transmitting ultrasonic waves using an ultrasonic wave probe to a workpiece's surface and determining defects based on reflected waves or diffracted waves caused by the defects in the workpiece. According to the ultrasonic wave probes' positions to the surface and manners to control the ultrasonic wave probes, the conventional ultrasonic wave defect detection technologies are divided into several kinds, a normal detection method in which an ultrasonic wave probe is used to transmit ultrasonic waves to a workpiece's surface vertically and then receive echoes of the ultrasonic waves vertically, a tilt detection method in which an ultrasonic wave probe is used to transmit ultrasonic waves to a workpiece's surface at an bevel angle and then receive echoes of the ultrasonic waves at an bevel angle, and a time-of-flight diffraction (TOFD) method in which longitudinal waves are transmitted by one of a pair of tilted ultrasonic wave probes to a workpiece's surface, and diffracted waves from the surface are received by the other probe.
However, the conventional ultrasonic wave defect detection technologies mentioned above each have their pros and cons and should be selected according to detection environment such as material or shape of a workpiece. That is, the conventional ultrasonic wave defect detection technologies mentioned above have their own limitations.
Further, all of the conventional ultrasonic wave defect detection technologies mentioned above require to put ultrasonic wave probes on a workpiece's surface to conduct a contacting detection, therefore, testing results of the conventional ultrasonic wave defect detection technologies are easily influenced by the contact status between the probes and the surface to be detected, especially for a workpiece having an uneven surface or a complex shape.

SUMMARY

As described above, testing results obtained by conventional ultrasonic wave defect detection technologies are easily influenced by contact status between probes and a workpiece's surface to be detected.
Embodiments of the present disclosure provide a defect detecting system, including: a laser device adapted for generating a pulse laser; an optical path adjusting device adapted for adjusting an optical path of the pulse laser generated by the laser device to project the pulse laser on a workpiece's surface to be detected to conduct a pulse laser scanning; a signal receiving device adapted for capturing a thermal excitation ultrasonic wave signal caused by the pulse laser scanning the workpiece and an imaging device adapted for forming a dynamic waveform image based on the thermal excitation ultrasonic wave signal received by the signal receiving device.
Embodiments of the present disclosure also provides a defect detecting method, including: scanning a workpiece's surface to be detected using a pulse laser; receiving a thermal excitation ultrasonic wave signal caused by the pulse laser scanning the workpiece; and generating a dynamic waveform image based on the thermal excitation ultrasonic wave signal received by the signal receiving device.
Compared with the existing techniques, the embodiments of the present disclosure have following advantages:
A pulse laser is used as a signal source, replacing ultrasonic waves in existing solutions, to scan a workpiece, needless probes to contact a surface. Therefore, a more precise testing result can be obtained without influences of contact status between probes and a surface to be detected. Further, the contactless scanning detection in the present disclosure improves detection efficiency greatly and can be used to detect without destruction, especially a workpiece even having a complex shape, which is difficult to be detected for the existing detection technologies.
Further, a dynamic waveform image generated based on the thermal excitation ultrasonic wave signal is visualized and real time. And differences between testing results obtained by different technicians are minor, that is, technician's testing skills have little influence on the testing result.

## BRIEF DESCRIPTION OF THE DRAWINGS

FIG. 1 illustrates a structural schematic view of an defect detecting system in an embodiment of the present disclosure;

FIG. 2 illustrates a structural schematic view of an defect detecting system in another embodiment of the present disclosure;

FIG. 3 illustrates a schematic view of galvanometer mirror assembly of the defect detecting system in FIG. 2 according to an embodiment of the present disclosure;

FIG. 4 illustrates a schematic view of the defect detecting system in FIG. 2 projecting a pulse laser to a surface to be detected in an embodiment of the present disclosure;

FIG. 5 illustrates a schematic view of the defect detection system in FIG. 2 obtaining spatial projection coordinates of a pulse laser on a surface to be detected in an embodiment of the present disclosure;

FIG. 6 illustrates a schematic view of a 3D positioning of a defect by an ultrasound probe assembly including two probes in an embodiment of the present disclosure; and

FIG. 7 illustrates a flow chart of a defect detecting method in an embodiment of the present disclosure.

## DETAILED DESCRIPTION

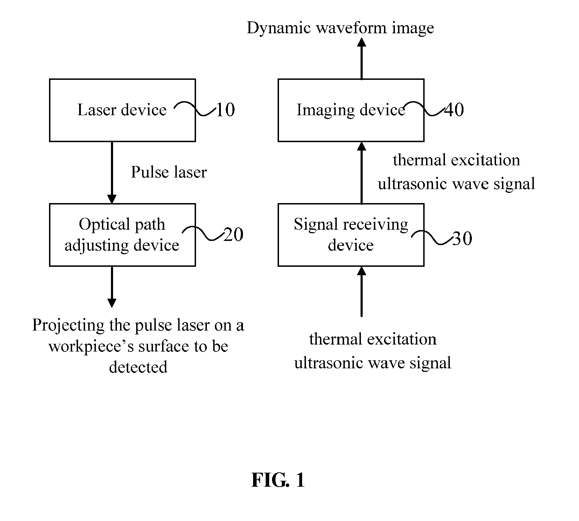

Referring to FIG.1, embodiments of the present disclosure providing a defect detecting system including: a laser device 10 adapted for generating a pulse laser; an optical path adjusting device 20 adapted for adjusting the optical path of the pulse laser generated by the laser device 10 to project the pulse laser on a workpiece's surface to conduct a laser scanning; a signal receiving device 30 adapted for capturing a thermal excitation ultrasonic wave signal caused by the pulse laser scanning the surface to be detected; and an imaging device 40 adapted for forming a dynamic waveform image based on the thermal excitation ultrasonic wave signal.

In the above embodiments, the pulse laser generated by the laser device 10 is used as a detecting signal source. The pulse laser's projection position on a surface to be detected can be adjusted by the optical path adjusting device 20 to conduct a laser scanning. It is indicated that an instantaneous and intensive heat expansion occurs at the pulse laser's projection position so that a thermal excitation ultrasonic wave is generated. The thermal excitation ultrasonic wave goes into internal of the workpiece along the surface to be detected. When the thermal excitation ultrasonic wave passes a defect in the workpiece, the thermal excitation ultrasonic wave changes in waveform. Therefore, by capturing the thermal excitation ultrasonic wave signal with the signal receiving device 30 and generating a dynamic waveform image with the imaging device 40, a visualized and real time knowledge of the internal of the workpiece can be provided.

There is provided embodiments to further illustrate detailed structure of the detecting system and work procedure.

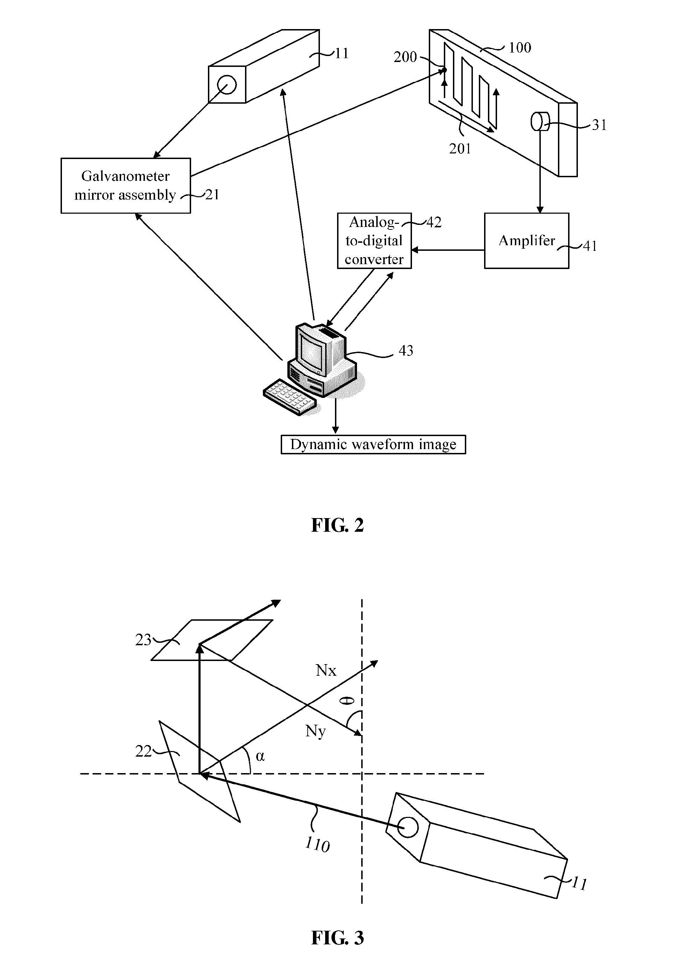

Referring to FIG. 2, a defect detecting system may include: a laser device 11 adapted for generating a pulse laser; an galvanometer mirror assembly 21 adapted for adjusting a reflection angle of the pulse laser generated by the laser device 11 to project the pulse laser on a workpiece 100's surface to conduct a laser scanning; an ultrasound probe assembly 31 adapted for capturing a thermal excitation ultrasonic wave signal caused by the pulse laser scanning the workpiece 100's surface; an amplifier 41 adapted for increasing the amplitude of the thermal excitation ultrasonic wave signal to form a first signal; an analog-to-digital converter 42 adapted for converting the first signal to a second signal by performing an analog-to-digital conversion to the first signal; and a central control computer 43 adapted for sending a scanning control signal to control an optical path adjusting process, controlling the laser device's switch, sending a synchronization signal to the analog-to-digital converter 42 while starting the laser device 11, and receiving the digitalized second signal output from the analog-to-digital converter 42 to form and display a dynamic waveform image.

With combination of FIG.2 and FIG. 3, in some embodiments, the galvanometer mirror assembly 21 may include: a two-axis scanning mirror assembly controlled by a motor. The two-axis scanning mirror assembly includes: a first mirror 22 and a second mirror 23. The motor is controlled by the central control computer 43. After the laser device 11 transmits a pulse laser 110, the pulse laser 110 firstly arrives at the first mirror 22 of the galvanometer mirror assembly 21, then is reflected by the first mirror 22 and arrives at the second mirror 23, and then is reflected by the second mirror 23 to a workpiece 100's surface.

From above description about the work mechanism of the galvanometer mirror assembly 21 including the first mirror 22 and the second mirror 23, the pulse laser's projection position 200 on the workpiece's surface can be adjusted by the motor controlling angles of the two mirrors. For example, a horizontal projection position of the pulse laser 110 on the workpiece's surface can be controlled by adjusting an angle $\alpha$ between a normal line $N_X$ of the first mirror 22 and a horizontal axis, and a vertical projection position of the pulse laser 110 on the workpiece's surface can be controlled by adjusting an angle $\theta$ between a normal line $N_Y$ of the second mirror 23 and a vertical axis. Therefore, the projection position 200 on the workpiece's surface is determined according to the horizontal projection position and the vertical projection position of the pulse laser 110.

For illustration purposes and not intend to limit the scope of the disclosure, the pulse laser may conduct a raster-scan. Specifically, two mirrors in the galvanometer mirror assembly each is set to have an initial angle, and then the central control computer 43 sends a first scanning control signal to the motor in the galvanometer mirror assembly 21 to keep the first mirror 22 still, while to control the second mirror 23 to rotate anticlockwise to a first angle (including the initial angle), and to stay for a predetermined time at the first angle, at this time, the laser device 11 is started to generate a pulse laser 110 to project on the surface to be detected. Then, the central control computer 43 controls the second mirror 23 to rotate to a second angle, the pulse laser 110 is started to generate a pulse laser 110 to project on the surface to be detected again, and so on. With this, the surface is scanned by the pulse laser 100 vertically and upwardly from a first horizontal position.

After the pulse laser scans the surface to be detected vertically from the first horizontal position, the central control computer 43 sends a second scanning control signal to the motor in the galvanometer mirror assembly 21 to control the second mirror 23 back to the initial angle and the first mirror 22 to rotate a predetermined angle relative to the initial angle, so that the pulse laser's initial projection position on the surface to be detected shifts from the first horizontal position to a second horizontal position. The shift is along a direction of an arrow 201as shown in FIG. 2.

Hereafter, the central control computer 43 sends a third scanning control signal to the motor in the galvanometer mirror assembly 21 to keep the first mirror 22 still and to control the second mirror 23 to rotate a certain angle anticlockwise. As described above, the second mirror is controlled to stay for a predetermined time after each rotating (including the original angle), and while the second mirror is still the laser device 11 is started to generate a pulse laser 110 to project on the surface to be detected, so that the surface to be detected can be scanned by the pulse laser 100 vertically and upwardly. And so on and so forth, the surface to be detected is performed with a raster-scan.

During the pulse laser scanning, a thermal excitation ultrasonic wave is generated, which is captured by the ultrasound probe assembly 31. There are various methods for the ultrasound probe assembly 31 to capture the thermal excitation ultrasonic wave signal.

In some embodiments, the ultrasound probe assembly 31 may be a single probe which is used to adhere to the workpiece's surfaces including side surfaces and back surfaces. The single probe can detect the thermal excitation ultrasonic wave signal vertically or at a bevel angle.

In some embodiments, the ultrasound probe assembly 31 may include a probe group including multiple probes (two or more). The probe group is used to adhere to different positions of a workpiece 100 in detecting, especially for a workpiece having a great depth, to position its internal defects in 3D, so that not only the defects' projection positions on the workpiece's surface but also the defects' depths in the workpiece can be obtained. Therefore, multiple probes can ensure a defect positioning with more accuracy.

After capturing the thermal excitation ultrasonic wave signal, the ultrasound probe assembly 31 sends the thermal excitation ultrasonic wave signal to the amplifier 41. The amplifier 41 amplifies the thermal excitation ultrasonic wave signal in amplitude so that waveforms to be formed can clearly reflect internal conditions of the work piece 100. Furthermore, in order to make the waveforms to be formed more accurate, the amplifier 41 further includes an integrated filter device to get rid of interference waves and select a useful signal wave. For example, a signal wave with a particular frequency may be obtained by choosing a low-pass mode, a high-pass mode or a bandpass mode of the integrated filter device and its cut-off frequency or a central frequency.

The amplifier 41 sends the amplified thermal excitation ultrasonic wave signal to the analog-to-digital converter 42 for further treatment after amplifying the thermal excitation ultrasonic wave signal in amplitude.

The analog-to-digital converter 42 is controlled by the central control computer 43. The central control computer 43 sends a synchronization signal to the analog-to-digital converter 42 while starting the laser device 11 to generate a pulse laser 110, so that the analog-to-digital conversion of the analog-to-digital converter 42 is synchronized with the start of the laser device 11. After the analog-to-digital converter 42 completes conversion, the thermal excitation ultrasonic wave signal is converted in digitalized form and then transmitted to the central control computer 43 in form of waveform data queue. Because the analog-to-digital conversion of the analog-to-digital converter 42 is synchronized with the start of the laser device 11, the digitalized thermal excitation ultrasonic wave signal includes time information when the pulse laser is transmitted.

Hereafter, a dynamic waveform image is formed based on the digitized thermal excitation ultrasonic wave signal in a waveform image forming device in the central control computer 43. Specifically, data in the waveform data queue of the digitized thermal excitation ultrasonic wave signal is arranged in array according to spatial projection coordinates of the pulse laser scanning on the surface to be detected, a brightness modulation is performed to the digitized thermal excitation ultrasonic wave signal's amplitudes at different moments to obtain brightness images at different moments, and the brightness images are continuously displayed in sequence of time to form a dynamic waveform image.

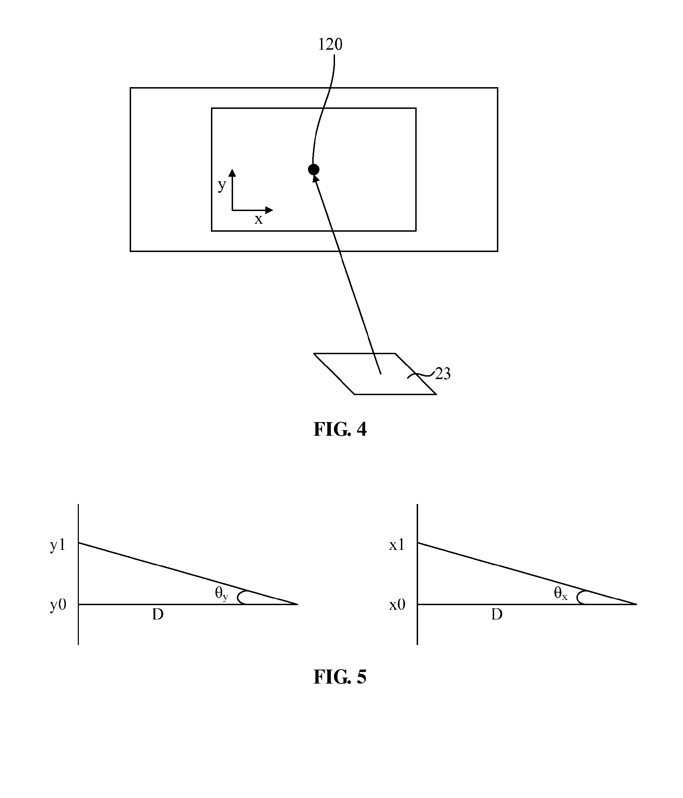

Referring to FIG.4, taking a center 120 of the pulse laser's scanning area on the surface as a reference point of an x-y coordinate system, and a distance between the second mirror 23 and the center 120 as a reference, a spatial projection coordinate of the projection point relative to the reference point can be calculated on the condition that an angle of a projection point of the pulse laser relative to the reference point is known.

With combination of FIG.4 and FIG.5, in some embodiments, a reference coordinate of the center 120 is (x0, y0), and a distance between the second mirror 23 and the center 120 is D, then the spatial projection coordinates of projection points of the pulse laser in a scanning region 110 can be obtained according to the reference coordinate of the center 120. For example, $\theta_y$ is an included angle between a first connection line between a projection point's coordinate y1 along y direction and a corresponding reflection point on the second mirror 23, and a second connection line between a center point's coordinate y0 along y direction and the corresponding reflection point on the second mirror 23. Thus, y1 = y0 + D x tanθy. Similarly, θx is an included angle between a third connection line between a projection point's coordinate x1 along an x direction and a corresponding reflection point on the second mirror 23, and a fourth connection line between a center point's coordinate x0 along x direction and the corresponding reflection point on the second mirror 23. Thus, x1 = x0 + D x $\tan\theta_x$. Therefore, all spatial projection coordinates of a projection point of the pulse laser relative to the center point can be determined.

Further, there is provided another embodiment to illustrate how to obtain a depth of a workpiece's internal defect with taking an ultrasound probe assembly including two probes as an example.

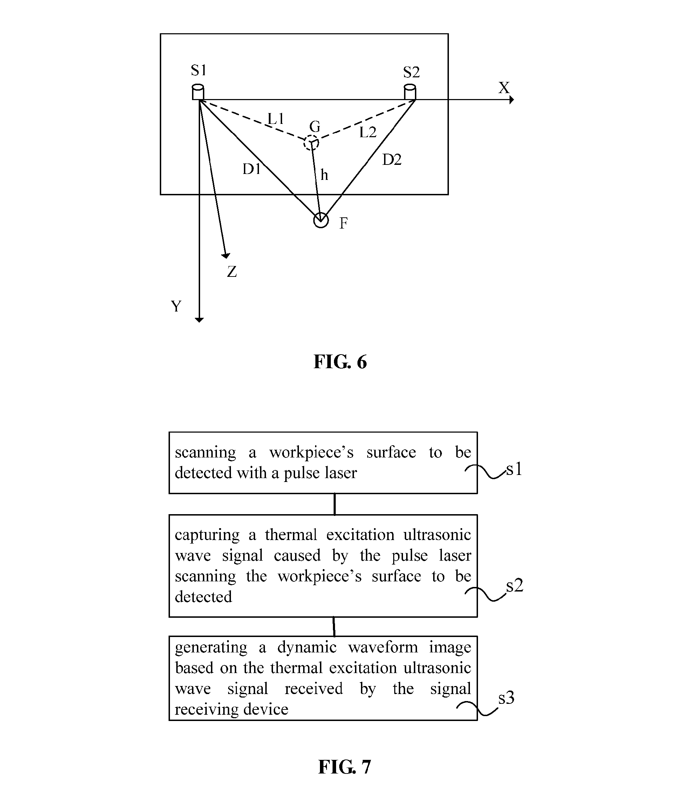

Referring to FIG.6, a pulse laser is projected to a point G on a workpiece's surface to be detected, which results in a thermal excitation ultrasonic wave. The thermal excitation ultrasonic wave changes when passing a defect point F, and the change can be detected by probes S1 and S2. After spatial projection coordinates of the pulse laser's projection points are obtained according to the method shown in FIG. 4 and FIG. 5, a depth of the internal defect can be determined according to position relationships between probes S1 and S2 and the corresponding pulse laser's projection point, and time periods the thermal excitation ultrasonic wave signal transmitting from the defect point F to the probes S1 and S2.

Specifically, a distance between the probe S1 and the defect point F is D1, a distance between the probe S2 and the defect point F is D2, a time period for the thermal excitation ultrasonic wave signal transmitting from the defect point F to the probes S1 is $T_1$. a time period for the thermal excitation ultrasonic wave signal transmitting from the defect point F to the probes S2 is $T_2$, a speed of the thermal excitation ultrasonic wave signal is v, a distance between the probe S1 and the pulse laser's projection point G is L1, a distance between the probe S2 and the pulse laser's projection point G is L2, and a depth of a defect is h, thus:

$$D1 = v \times T1;$$

$$D2 = v \times T2;$$

$$h^2 = D1^2 - L1^2 = D2^2 - L2^2 = (v \times T1)^2 - L1^2 = (v \times T2)^2 - L2^2 \qquad (1)$$

Based on the above description, T1, T2, L1, and L2 are measurable, formula (1) is transformed as follow:

$$v^2 = \left(L1^2 - L2^2\right) \div \left(T_1^{\,2} - T_2^{\,2}\right) \qquad (2)$$

And the depth of the defect can be calculated by putting the formula (2) into formula (1):

$$h = \sqrt{L1^2 \{\left[1 - (L2/L1)^2\right] \div \left[1 - (T_2/T_1)^2\right] - 1\}}$$

Therefore, the depth of the defect is obtained.

In the above description, two probes are taken as an example to position the internal defects, which should not intend to limit the scope of the present disclosure. If the ultrasound probe assembly includes more than two probes, similar method can be applied to position the defect's depth, which is not described in detail hereinafter.

Corresponding to the system described above, the present disclosure also provides a defect detecting method, including:

Step s1, a workpiece's surface to be detected is scanned with a pulse laser;

Step s2, a thermal excitation ultrasonic wave signal caused by the pulse laser scanning the surface is captured; and

Step s3, a dynamic waveform image is formed based on the thermal excitation ultrasonic wave signal received by the signal receiving device.

Embodiments of the defect detecting method may refer to the relative description for the defect detecting system, which are not described in detail hereinafter.

According to above embodiments, a pulse laser is used as a signal source, replacing ultrasonic waves in existing solutions, to scan a workpiece, needless probes to contact a surface. Therefore, a more precise testing result can be obtained without influences of contact status between probes and a surface to be detected.

Further, the dynamic waveform image generated based on the thermal excitation ultrasonic wave signal provides a visualized and real time detecting result.

Although the present disclosure has been disclosed as above with reference to preferred embodiments, it is not intended to limit the present invention. Those skilled in the art may modify and vary the embodiments without departing from the spirit and scope of the present invention. Accordingly, the scope of the present disclosure shall be defined in the appended claim.

## Claims

1. A defect detecting system, comprising:

   a laser device adapted for generating a pulse laser;
   an optical path adjusting device adapted for adjusting an optical path of the pulse laser generated by the laser device to project the pulse laser on a workpiece's surface to conduct a laser scanning;
   a signal receiving device adapted for capturing a thermal excitation ultrasonic wave signal caused by the pulse laser scanning the workpiece; and
   an imaging device adapted for forming a dynamic waveform image based on the thermal excitation ultrasonic wave signal received by the signal receiving device.

2. The system according to claim 1, wherein the optical path adjusting device comprises a two-axis scanning mirror assembly including a first mirror and a second mirror, the first mirror determines a horizontal projection position of the pulse laser on the workpiece's surface based on an angle between the first mirror's normal line and a horizontal axis, and the second mirror determines a vertical projection position of the pulse laser on the workpiece's surface based on an angle between the second mirror's normal line and a vertical axis.

3. The system according to claim 1, wherein the signal receiving device includes one or more ultrasound probes which is configured on the workpiece's surfaces in detecting, the workpiece's surfaces including side surfaces or back surfaces.

4. The system according to claim 1, wherein the imaging device comprises:

   an amplifier adapted for amplifying the thermal excitation ultrasonic wave signal in amplitude;
   an analog-to-digital converter adapted for performing an analog-to-digital conversion to the amplified thermal excitation ultrasonic wave signal; and a waveform image forming device adapted for performing a brightness modulation to the digitalized thermal excitation ultrasonic wave signal's amplitude at each moment after the analog-to-digital conversion to obtain waveform images, and continuously displaying the waveform images in sequence of time to form a dynamic waveform image.

5. The system according to claim 4, wherein the analog-to-digital conversion process is synchronized with the laser device transmitting the pulse laser.

6. A defect detecting method, comprising:

   scanning a workpiece's surface with a pulse laser;
   capturing a thermal excitation ultrasonic wave signal caused by the pulse laser scanning the workpiece's surface; and
   forming a dynamic waveform image based on the thermal excitation ultrasonic wave signal.

Dynamic waveform image

| Laser device 10 | | Imaging device 40 |

Pulse laser

thermal excitation
ultrasonic wave signal

| Optical path adjusting device 20 | | Signal receiving device 30 |

Projecting the pulse laser on a
workpiece's surface to be
detected

thermal excitation
ultrasonic wave signal

**FIG. 1**

**FIG. 2**

**FIG. 3**

EP 2 570 805 A1

120

y

x

23

**FIG. 4**

y1

y0

θ_y

D

x1

x0

θ_x

D

**FIG. 5**

9

**FIG. 6**

| |
|---|
| scanning a workpiece's surface to be detected with a pulse laser $s1$ |
| capturing a thermal excitation ultrasonic wave signal caused by the pulse laser scanning the workpiece's surface to be detected $s2$ |
| generating a dynamic waveform image based on the thermal excitation ultrasonic wave signal received by the signal receiving device $s3$ |

**FIG. 7**

# INTERNATIONAL SEARCH REPORT

| International application No. |
| --- |
| PCT/CN2011/073349 |

## A. CLASSIFICATION OF SUBJECT MATTER

See extra sheet

According to International Patent Classification (IPC) or to both national classification and IPC

## B. FIELDS SEARCHED

Minimum documentation searched (classification system followed by classification symbols)

IPC:  G01N29;  G01N21

Documentation searched other than minimum documentation to the extent that such documents are included in the fields searched

Electronic data base consulted during the international search (name of data base and, where practicable, search terms used)

CNKI, CPRS,ABS,CNTXT,VEN, ultrasonic, ultrasound, supersonic, supersound, wave, laser

## C. DOCUMENTS CONSIDERED TO BE RELEVANT

| Category* | Citation of document, with indication, where appropriate, of the relevant passages | Relevant to claim No. |
| --- | --- | --- |
| X<br>Y | SU Kun et al. Research of micro-crack detection technology based on laser ultrasonic OPTICAL TECHNIQUE  Nov. 2002, Vol. 28, No. 6, pages 518-519 | 1,3,6<br>2,4-5 |
| Y | JP9281085A (  NIPPON STEEL CORP) 31 Oct.1997 (31.10.1997) Paragraphs [0011]-[0015] in the description and figure 1 | 2 |
| Y | JP2006300634A(NAT INST OF ADV IND & TECHNOL) 02 Nov.2006 (02.11.2006) Paragraphs [0018]-[0026] in the description and figures 1-3 | 4-5 |
| Y | JP11304768A (MITSUBISHI HEAVY IND LTD) 05 Nov. 1999 (05.11.1999) Paragraphs [0014]-[0023] in the description and figure 1 | 2 |
| X<br>Y | DU Liting et al. Research on laser ultrasonic exciting technology  NONDESTRUCTIVE TESTING  Jun. 2005, Vol.27, No. 6, pages 286-287 | 1,3,6<br>2,4-5 |
| A | CN101490543A (CENT RES INST ELECTRIC POWER IND) 22 Jul.2009 (22.07.2009) the whole document | 1-6 |
| A | CN100523802C (TOSHIBA CORP) 05 Aug.2009(05.08.2009) the whole document | 1-6 |

☐ Further documents are listed in the continuation of Box C.        ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 Jul. 2011(10.07.2011) | **11 Aug. 2011 (11.08.2011)** |
| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>WANG,Shuling<br><br>Telephone No. (86-10)62085649 |

Form PCT/ISA /210 (second sheet) (July 2009)

EP 2 570 805 A1

INTERNATIONAL SEARCH REPORT
Information on patent family members

| International application No. |
| --- |
| PCT/CN2011/073349 |

| Patent Documents referred in the Report | Publication Date | Patent Family | Publication Date |
| --- | --- | --- | --- |
| JP9281085A | 31.10.1997 | NONE | |
| JP2006300634A | 02.11.2006 | NONE | |
| JP11304768A | 05.11.1999 | NONE | |
| CN101490543A | 22.07.2009 | WO2008007460A | 17.01.2008 |
| | | EP20070766972A | 06.07.2007 |
| | | KR20090045151A | 07.05.2009 |
| | | US2009199642A | 13.08.2009 |
| CN100523802C | 05.08.2009 | KR20070074463A | 12.07.2007 |
| | | JP2007183172A | 19.07.2007 |
| | | CN101003307A | 25.07.2007 |
| | | SG134222A | 29.08.2007 |

Form PCT/ISA /210 (patent family annex) (July 2009)

**INTERNATIONAL SEARCH REPORT**

International application No.

PCT/CN2011/073349

According to International Patent Classification (IPC) or to both national classification and IPC

G01N29/06 (2006.01) i

G01N29/34 (2006.01) i

G01N29/44 (2006.01) i

Form PCT/ISA /210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201010178619